# EUROPEAN PATENT SPECIFICATION

(11) **EP 4 364 936 B1**
(45) Date of publication and mention of the grant of the patent: **11.03.2026**
(21) Application number: 22853044.0
(22) Date of filing: 02.08.2022
(51) Int. Cl.: B32B 3/12, B32B 5/26, B32B 7/02, B32B 27/12

(54) **LAMINATED HOLLOW FORMED BODY**
LAMINIERTER HOHLFORMKÖRPER
CORPS LAMINÉ CREUX

(30) Priority: 05.08.2021 JP 2021129117
(43) Date of publication of application: 08.05.2024
(73) Proprietor: Kotobukiya Fronte Co., Ltd., Tokyo 105-0003 (JP)
(72) Inventor: OTOBE, Masayuki, Gyoda-shi, Saitama 361-0021 (JP)
(74) Representative: Huebner, Stefan Rolf
(86) International application number: PCT/JP2022/029606
(87) International publication number: WO 2023/013625

(56) References cited:
- WO-A1-2020/162590
- JP-A- 2012 096 506
- JP-A- 2019 006 118
- JP-A- 2019 162 830
- JP-A- 2021 045 946

## Description

### TECHNICAL FIELD

The present invention relates to a laminated hollow formed body, and more specifically, relates to a laminated hollow formed body that includes a core layer such as a honeycomb core, and that is used as a sound insulation member for an automobile, or the like.

### BACKGROUND ART

A laminated hollow formed body that is used as a sound insulation member for an automobile, or the like includes a core layer that is constituted by a plurality of tubular hollow cells having a roughly hexagonal shape and that is generally called a honeycomb core. In many such core layers, thermoplastic resin is used as a material. In the case in which the laminated hollow formed body is used as an automobile sound insulation member, hot press forming is performed on part of a region of the laminated hollow formed body, and a member including a plurality of regions differing in thickness is completed.

For example, JP 2017-196782 A describes a laminated structure including a hollow sheet material that is made of thermoplastic resin and in which a plurality of cells having a columnar shape is arrayed in the interior, and a metal member that is joined to the hollow sheet material. On the hollow sheet material, a molded concave portion thermally deformed by the metal member is formed, and the metal member is joined to the molded concave portion.

JP 2019 162830 A provides a hollow structure having excellent shock resistance.

### REFERENCE DOCUMENT LIST

### PATENT DOCUMENT

Patent Document 1: JP 2017-196782 A
Patent Document 2: JP 2019 162830 A

### SUMMARY OF THE INVENTION

### PROBLEM TO BE SOLVED BY THE INVENTION

In the core layer including the plurality of hollow cells made of resin, respective cell standing walls of the two adjacent hollow cells are overlapped, and a double standing wall is formed. There is a problem in that when the laminated hollow formed body including the core layer with such double standing walls is subjected to hot press forming for a desired shape of the member which has a plurality of regions differing in height of the core layer, strange noises such as crunching are generated from the interior of the laminated hollow formed body when force is applied from the exterior.

Therefore, the present invention has as an object to provide a laminated hollow formed body including a core layer with double standing walls in which the generation of strange noises such as crunching is restrained even when the laminated hollow formed body is subjected to hot press forming to have a plurality of regions differing in height of the core layer.

### MEANS FOR SOLVING THE PROBLEM

To achieve the above object, the present invention is a laminated hollow formed body including: a core layer in which hollow cells having a tubular shape are disposed along a plurality of rows; a front material layer that is provided on one surface of the core layer; and a back material layer that is provided on the other surface of the core layer, in which: the core layer includes a double standing wall with the two adjacent hollow cells, and the double standing wall is constituted by two cell standing walls made of resin; the core layer includes a first region having a first height, and a second region having a second height lower than the first height; and the two cell standing walls of the double standing wall of the core layer at the second region extend in the same direction as each other from a first end portion contacting with the front material layer to a second end portion contacting with the back material layer, and at least one of the first end portion and the second end portion is a lump portion made of the two cell standing walls integrally melted.

The two cell standing walls of the double standing wall may extend from the first end portion contacting with the front material layer to the second end portion contacting with the back material layer, in a linear shape or a curved shape.

The thickness of the back material layer may be less than the thickness of the front material layer, and the second end portion contacting with the back material layer may be the lump portion made of the two cell standing walls integrally melted.

Both of the first end portion and the second end portion may be the lump portion made of the two cell standing walls integrally melted.

Each thickness of the two cell standing walls that constitute the double standing wall of the core layer at the second region and that extend from the first end portion to the second end portion in a linear shape or a curved shape may be greater than the thickness of each cell standing wall of the double standing wall of the core layer at the first region.

Each of the hollow cells of the core layer may include a closed surface at one end and may include an open end at the other end, internal spaces of the hollow cells may communicate with the front material layer or the back material layer through the open ends of the hollow cells, the closed surfaces and the open ends of the hollow cells may be disposed along every other row on both surfaces of the core layer, and the closed surfaces of the adjacent hollow cells may fuse with each other.

A relationship between the first height h₁ of the core layer at the first region and the second height h₂ of the core layer at the second region may satisfy the expression 0.2 < h₂/h₁ < 0.8.

The tensile strength of the core layer at the second region may be 20 N or greater, in a direction that is a planar direction of the core layer and in which double standing walls overlap in the same direction, in accordance with JIS K 7127-1999.

### EFFECTS OF THE INVENTION

In this way, in the laminated hollow formed body according to the present invention, at the second region where the height of the core layer decreases by hot press forming, the double standing wall extends from the first end portion contacting with the front material layer to the second end portion contacting with the back material layer, in a linear shape or a curved shape, and at least one of the first end portion and the second end portion is the lump portion made of the two cell standing walls integrally melted. Therefore, it is possible to prevent the generation of strange noises such as crunching.

### BRIEF DESCRIPTION OF THE DRAWINGS

FIG. 1 is an exploded perspective view showing an embodiment of a laminated hollow formed body according to the present invention.
FIG. 2 is a partial sectional view showing the embodiment of the laminated hollow formed body according to the present invention.
FIG. 3 is an enlarged sectional view showing the embodiment of the laminated hollow formed body according to the present invention.
FIG. 4 is a perspective view showing a production process for a core material that is used for a core layer in the laminated hollow formed body according to the present invention.
FIG. 5 is a schematic plan view showing the core layer in the laminated hollow formed body according to the present invention.
FIG. 6 is a perspective view showing an external appearance of a sound insulation member for an automobile that is obtained by the hot press forming of a laminated hollow formed body in an example or a comparative example.
FIG. 7 is a sectional view showing a core layer at a region in an example 1.
FIG. 8 is a plan view showing the core layer on a front material layer side at the region in Example 1.
FIG. 9 is a plan view showing the core layer on a back material layer side at the region in Example 1.
FIG. 10 is a sectional view showing a core layer at a region in a comparative example 1.
FIG. 11 is a sectional view showing a core layer at a region in an example 3.
FIG. 12 is a sectional view showing a core layer at a region in a comparative example 2.
FIG. 13 is a sectional view showing a core layer at a region in a comparative example 3.
FIG. 14 is a sectional view showing a core layer at a region in an example 9.
FIG. 15 is a sectional view showing a core layer at a region in an example 7.
FIG. 16A is a plan view of a test specimen that is used in a tensile test in an example 10.
FIG. 16B is a sectional view of the test specimen shown in FIG. 16A, taken from line B-B.
FIG. 17 is a graph showing results of tensile tests in an example 10, a comparative example 6, and a comparative example 7.
FIG. 18 is a graph showing the result of the tensile test in Comparative example 6 on a different scale.

### MODE FOR CARRYING OUT THE INVENTION

An embodiment of a laminated hollow formed body according to the present invention will be described below with reference to the accompanying drawings. Here, a case in which the laminated hollow formed body is used as a sound insulation member for an automobile will be described, but the laminated hollow formed body in the present invention is not limited to this. Furthermore, the drawings are not drawn to scale, unless specified otherwise.

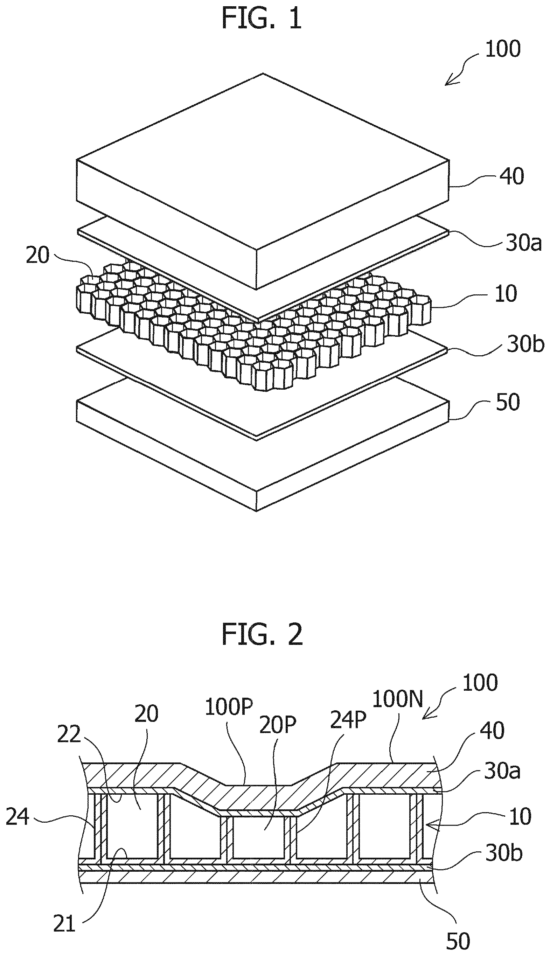

As shown in FIG. 1, a laminated hollow formed body 100 in the embodiment includes a core layer 10, a front material layer 40 provided on one surface of the core layer 10, and a back material layer 50 provided on the other surface of the core layer 10. The core layer 10 is generally called a honeycomb core, in which hollow cells 20 having a tubular shape are disposed along a plurality of rows. Furthermore, the laminated hollow formed body 100 in the embodiment includes film layers 30a, 30b between the core layer 10 and the front material layer 40 and between the core layer 10 and the back material layer 50, respectively. The laminated hollow formed body 100 in the embodiment is installed such that the front material layer 40 is on a vehicle cabin inner side when used as an interior material, and is installed such that the front material layer 40 is on a vehicle cabin outer side when used as an exterior material.

The above five layers are laminated, and thereafter, at a partial region thereof, hot press forming is performed in a lamination direction. Thereby, as shown in Fig. 2 as an example, the laminated hollow formed body 100 in the embodiment includes two regions: a first region 100N where the hot press forming has not been performed and a second region 100P where the hot press forming has been performed. The hot press forming is performed for matching the shape of the laminated hollow formed body 100 to the shape of a vehicle cabin. In the laminated hollow formed body 100, the core layer 10 is particularly compressed by the hot press forming, and the height of a core layer 10P at the second region 100P where the hot press forming has been performed is lower than the height of the core layer 10 at the first region 100N where the hot press forming has not been performed.

FIG. 2 illustrates a case in which the front material layer 40 side of the core layer 10 is dented by the hot press. However, the present invention is not limited to this, and the back material layer 50 side of the core layer 10 may be dented, or both the front material layer 40 side and back material layer 50 side of the core layer 10 may be dented.

Although details will be described later, the hollow cell 20 of the core layer 10 includes a closed surface 21 that has a roughly hexagonal tubular shape and that closes a cell end portion on one surface (a surface on the lower side in FIG. 2) of the core layer 10, at the cell end portion, includes an open end 22 that is open in a roughly hexagonal shape, at a cell end portion on the other surface (a surface on the upper side in FIG. 2) on the opposite side, and includes a double standing wall 24 (also referred to as a double side wall) at a part as a standing wall that links the closed surface 21 and the open end 22. The double standing wall 24 is configured by the overlap of respective cell standing walls (also referred to as cell side walls) of two adjacent hollow cells.

The material of the core layer 10 is not particularly limited if the material is a resin material that is ordinarily used as a sound insulation layer in a sound insulation member for an automobile, or the like. For example, a thermoplastic resin such as polypropylene (PP), polyethylene (PE), or polyethylene terephthalate (PET) is preferable. The height of the core layer 10 varies depending on the component of an automobile for which the laminated hollow formed body 100 is used, and therefore, it is not limited to the following description. However, from the standpoint of sound insulation, strength, weight and other characteristics of the core layer 10, a range from 3 mm to 50 mm is preferable, and a range from 5 mm to 30 mm is more preferable, at the second region 100N where the hot press forming has not been performed.

The material of the front material layer 40 and the back material layer 50 is not particularly limited if the material is ordinarily used as a front material and back material of the sound insulation member for the automobile. A fiber such as a synthetic fiber including a polyester fiber, a nylon fiber, and an acrylic fiber, an inorganic fiber including glass wool and rock wool, or a metal fiber including an aluminum fiber is preferable. As the fiber, a felt is preferable, and it should preferably be formed of a material such as a polyester fiber including a low-melting polyester fiber, or glass wool. It is preferable that the manufacturing method for the felt be a manufacturing method such as a needle punching method, a thermal bond method, or a spun lace method. In addition to such fibers, a thermoplastic resin such as polypropylene (PP), polyethylene (PE) or polyethylene terephthalate (PET), a metal foil such as aluminum, and a paper such as kraft paper may be adopted independently or as a combination by lamination or the like. Furthermore, from the standpoint of the reduction in the weight of the laminated hollow formed body, a foam of a thermoplastic resin, a thermosetting resin, or the like, as exemplified by urethane foam, polyethylene foam, and nylon foam, may be used, and the foam and the fiber may be combined.

As the weight densities of the front material layer 40 and the back material layer 50, the front material layer 40 should preferably be higher than the back material layer 50, because the front material layer 40 serves also as the design in the vehicle cabin. For example, the weight density of the front material layer 40 should preferably be 30 to 600 g/m², and should more preferably be 50 to 500 g/m². For example, the weight density of the back material layer 50 should preferably be 15 to 300 g/m², and should more preferably be 30 to 300 g/m².

As the thicknesses of the front material layer 40 and the back material layer 50, the front material layer 40 should preferably be thicker than the back material layer 50, because the front material layer 40 requires greater durability. For example, the thickness of the front material layer 40 should preferably be 0.1 to 5 mm, and should more preferably be 0.1 to 3 mm. For example, the thickness of the back material layer 50 should preferably be 0.1 to 5 mm, and should more preferably be 0.1 to 2 mm. Each of the thicknesses of the front material layer 40, the back material layer 50, and a later-described film layer 30 is a length in the lamination direction (the height direction or the top-bottom direction in FIG. 1).

For example, a resin film of polypropylene (PP), polyethylene (PE), polyethylene terephthalate (PET), polyamide (PA) or the like can be used as the material of the film layer 30, but is not limited thereto. The thickness of the film layer 30 is not particularly limited, but for example, should preferably be 0.03 to 1.5 mm, and should more preferably be 0.05 to 1.0 mm.

The film layer 30 may adhere to the core layer 10, the front material layer 40, and the back material layer 50 by thermal welding, or may adhere through an adhesive (not illustrated). The adhesive is not particularly limited, and for example, an epoxy adhesive, an acrylic adhesive, an olefinic adhesive, a rubber adhesive, or the like can be used.

The double standing wall 24 of the hollow cell 20 of the core layer 10 at the first region 100N where the hot press forming has not been performed is configured between the closed surface 21 and open end 22 of the hollow cell 20 such that the two linear cell standing walls extend roughly parallel in the same direction. However, a double standing wall 24P of a hollow cell 20P of the core layer 10P at the second region 100P where the hot press forming has been performed has a different configuration due to the hot press forming.

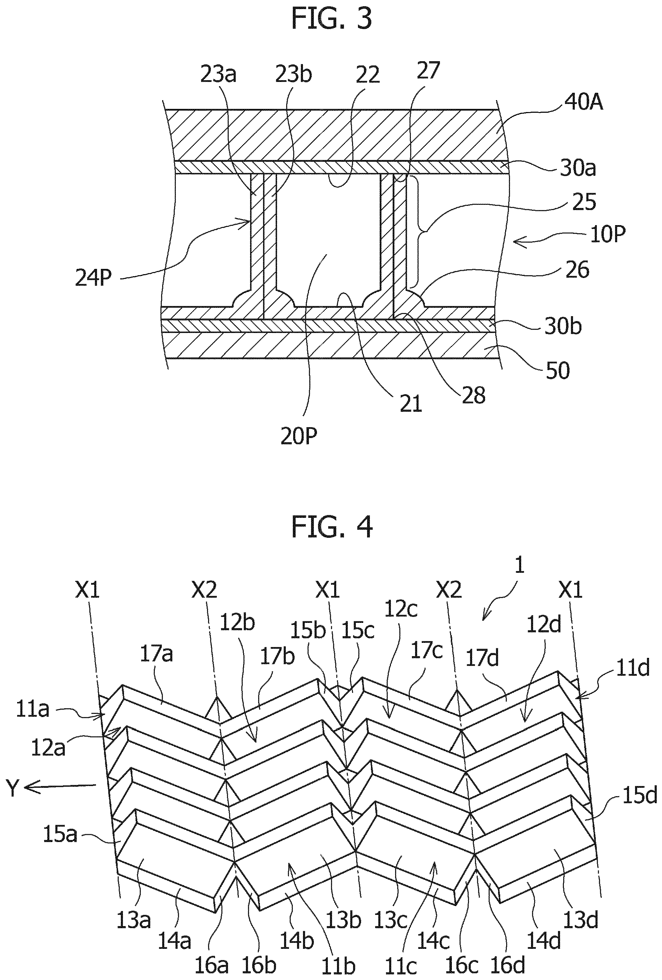

In the double standing wall 24P to which the hot press forming has been performed, as shown in FIG. 3, two cell standing walls 23a, 23b extend in the same direction as each other from a first end portion 27 contacting with the front material layer 40 to a second end portion 28 contacting with the back material layer 50 (referred to as an "extending portion 25", hereinafter), and the second end portion 28 contacting with the back material layer 50 is a lump portion 26 resulting from the integral melting of the two cell standing walls 23a, 23b. The lump portion 26 should preferably have a greater thickness than the total thickness of the two cell standing walls 23a, 23b of the extending portion 25. A cavity may exist in the interior of the lump portion 26, or fusing surfaces of the two cell standing walls 23a, 23b may exist in the interior of the lump portion 26. However, the lump portion 26 is not separated into the two original cell standing walls, even when the force for division is applied.

In the inventors' knowledge, conventionally, in the double standing wall of the hollow cell to which the hot press forming has been performed, the two cell standing walls constituting the double standing wall deform to different shapes, and fuse at a plurality of sites. Then, when force is applied to the hollow cell to which the hot press forming has been performed, the fusing sites are separated, and on that occasion, strange noises such as crunching are generated. On the other hand, in the laminated hollow formed body 100 in the embodiment, as described above, both of the two cell standing walls 23a, 23b of the double standing wall 24P to which the hot press forming has been performed extend so as to maintain the same direction as each other from the first end portion 27 contacting with the front material layer 40 to the second end portion 28 contacting with the back material layer 50, the second end portion is the lump portion 26 resulting from the integral melting of the two cell standing walls 23a, 23b, and there is no portion where the two cell standing walls deform to different shapes from each other and some sites fuse. Consequently, even when force is applied to the double standing wall 24P, strange noises such as crunching are not generated.

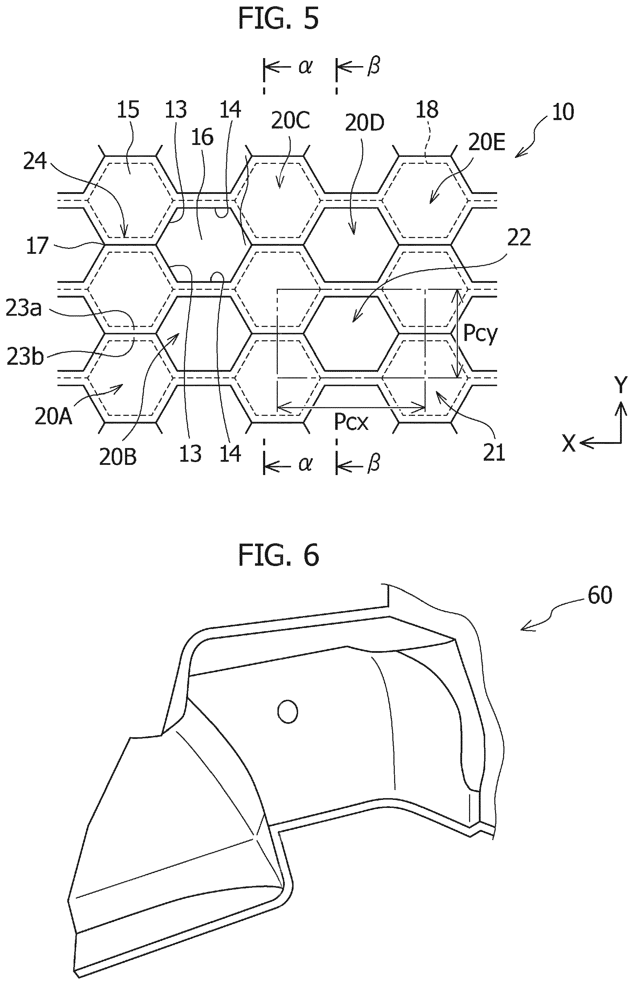

The tensile strength of the core layer 10 in the planar direction is very high due to the formation of the lump portion 26 at the double standing wall 24P to which the hot press forming has been performed, and should preferably be 20 N or greater in a direction (a production direction Y for the core layer shown in FIG. 4 and FIG. 5, although details will be described later) in which double standing walls 24P overlap in the same direction. When the tensile strength of the core layer is less than 20 N, the lump portion 26 is not formed at the double standing wall to which the hot press forming has been performed, and the above-described double standing wall in which the two cell standing walls deforms to different shapes and fuse at a plurality of sites is formed. Consequently, in the core layer in which the tensile strength is less than 20 N, when force is applied to the hollow cell, the fusing sites are separated, and on that occasion, strange noises such as crunching are generated. The tensile strength of the core layer 10 is measured by a test in which the tensile direction is a direction in which double standing walls 24P overlap in the same direction, in accordance with JIS K 7127-1999. The tensile strength of the core layer should more preferably be 22 N or greater, and further should preferably be 24 N or greater. The upper limit is not particularly limited, and is 200 N or less, for example.

FIG. 3 shows a case in which the two cell standing walls 23a, 23b from the first end portion 27 to the second end portion 28 each extend in a linear shape and thereby extend in the same direction. However, the two cell standing walls 23a, 23b are cell standing walls after the hot press forming as described above, and therefore may extend from the first end portion 27 to the second end portion 28 in a curved shape, due to heat shrinkage. In the case of a curved shape, it is possible to extend in the same direction as each other. Furthermore, when the two cell standing walls 23a, 23b extend in the same direction in a shape other than a linear shape and a curved shape, for example, in such a shape that the two cell standing walls 23a, 23b bend in the same direction with no contact, it is possible to prevent the generation of strange noises such as crunching. FIG. 3 shows a case in which the lump portion 26 of the double standing wall 24P is provided on the closed surface 21 side of the hollow cell 20P. However, the present invention is not limited to this, and the lump portion 26 may be provided on the open end 22 side of the hollow cell 20P, or may be provided on both of the closed surface 21 side and the open end 23 side.

The double standing wall 24P in which at least one end portion is the lump portion 26 and the two cell standing walls 23a, 23b extend in the same direction from the end portion to the end portion in a linear shape, a curved shape or the like can be made by adjusting conditions such as the heating temperature in the hot press forming for the laminated hollow formed body 100, the compression ratio of the core layer 10 by the hot press forming, and the thickness of the cell standing wall 23 of the core layer 10. Conventionally, in the case in which the hot press forming is performed on the laminated hollow formed body, the heating temperature is set so as to be relatively low to maintain the strength after hot press forming or avoiding unintentional decrease in height due to the melting of the core layer. Therefore, as described above, the two cell standing walls constituting the double standing wall deform to different shapes from each other and fuse at a plurality of sites. The inventors performed the hot press forming at a higher heating temperature than before, causing the heat shrinkage of the two cell standing walls constituting the double standing wall, and adopted a length corresponding to the compression ratio of the core layer. Thereby, it was possible to obtain the double standing wall 24P in which the two cell standing walls 23a, 23b extend in the same direction as each other from one end portion to the other end portion in a linear shape, a curved shape or the like.

Since the heat shrinkage of the cell standing walls is caused in this way, the thickness of each of the cell standing walls 23a, 23b that constitute the double standing wall 24P of the core layer 10P after the hot press forming and that extend in the same direction as each other in a linear shape, a curved shape or the like is larger than the thickness of each of the cell standing walls 23a, 23b of the double standing wall 24 of the core layer 10 to which the hot press forming has not been performed. However, the thickness does not uniformly increase over the whole length of the cell standing walls 23a, 23b to which the hot press forming has been performed. The thickness increases at parts of the cell standing walls 23a, 23b to which the hot press forming has been performed, and the change in thickness differs depending on various conditions of the hot press forming.

The heating temperature in the hot press forming should preferably be higher than the conventional heating temperature, although it is difficult to give specific numerical values because the heating temperature in the hot press forming significantly varies depending on the kind of material of the core layer 10, the thickness of the cell standing wall 23, the materials and thicknesses of the front material layer 40 and the back material layer 50, and other characteristics. For forming the lump portion 26 of the double standing wall 24P at the end portion on the back material layer 50 side of the laminated hollow formed body 100, for example, the heating temperature on the back material layer 50 side is set so as to be higher than that on the front material layer 40 side. For forming the lump portion 26 at the end portion on the front material layer 40 side, the heating temperature on the front material layer 40 side is set so as to be higher than that on the back material layer 50 side. Furthermore, by adjusting conditions such as the heating temperature, it is possible to form the lump portion 26 on both of the front material layer 40 side and the back material layer 50 side. Regardless of the side on which the lump portion 26 is formed, the generation of strange noises can be prevented, and the performance of the laminated hollow formed body 100 is not changed. In the case in which the lump portion 26 is formed on the closed surface 21 side of the hollow cell 20P, the closed surfaces 21 of adjacent hollow cells 20P fuse with each other partially or wholly.

The compression ratio of the core layer 10 in the hot press forming can be expressed as the ratio between the heights of core layers before and after the hot press forming. In other words, this is a ratio h₂/h₁ between a first height h₁ of the core layer 10P at the first region 100N where the hot press forming has not been performed in the laminated hollow formed body 100 and a second height h₂ of the core layer 10P at the second region 100P where the hot press forming has been performed. This ratio h₂/h₁ should preferably satisfy the expression 0.2 < h₂/h₁ < 0.8, and should more preferably satisfy the expression 0.3 < h₂/h₁ < 0.7.

In the case in which the ratio h₂/h₁ is 0.2 or less, the second height h₂ of the core layer 10P after the hot press forming is compressed in a very low state, and therefore, the interval between the front material layer 40 and the back material layer 50 is very narrow relative to the length of the double standing wall before the hot press forming. Therefore, the two cell standing walls constituting the double standing wall easily form one lump shape as a whole. That is, it is difficult to make the double standing wall 24P in which the two cell standing walls 23a, 23b extend in the same direction as each other from one end portion to the other end portion in a linear shape, a curved shape, or the like. In this case, it is unlikely that the two cell standing walls constituting the double standing wall will deform to different shapes and fuse in part, causing the generation of strange noises, and therefore, the benefit of adopting the double standing wall 24P in the present invention is low.

On the other hand, in the case in which the ratio h₂/h₁ is 0.8 or greater, the second height h₂ of the core layer 10P after the hot press forming is high, and the double standing wall is not greatly compressed between the front material layer 40 and the back material layer 50. Accordingly, even when the two cell standing walls constituting the double standing wall deform to different shapes, it is unlikely that fusion will occur at a plurality of sites, which causes the generation of strange noises, and therefore, the benefit of adopting the double standing wall 24P in the present invention is low. Even in the case in which the ratio h₂/h₁ is 0.8 or greater, it is possible to make the double standing wall 24P in which the two cell standing walls 23a, 23b extend in the same direction as each other from one end portion to the other end portion in a linear shape, a curved shape or the like.

An example of a production process for a core material that becomes the core layer 10 of the laminated hollow formed body 100 according to the present invention will be described with reference to FIG. 4 and FIG. 5. The example of the production process for the core material is described in more detail in International Publication No. WO 2006/053407, which is regarded as a part of the description in the present specification by this reference.

As shown in FIG. 4, this core material 1 is formed by thermoforming a flat material sheet by a roller (not illustrated) having a predetermined pattern and performing plastic deformation without substantially cutting the sheet. The material of the core material 1 becomes the material of the core layer 10 with no change.

The core material 1 has a three-dimensional structure in which a mountain portion 11 and a valley portion 12 are alternately disposed in a width direction X orthogonal to the production direction Y. The mountain portion 11 is constituted by two side surfaces 13 and a top surface 17 therebetween, and the valley portion 12 is constituted by two side surfaces 13 shared with adjacent mountain portions 11 and a bottom surface 14 therebetween. In the embodiment, a case in which the shape of the mountain portion 11 is a trapezoidal shape as shown in FIG. 4 will be described. However, the present invention is not limited to this, and a curve shape such as a sine wave shape and a bow shape may be adopted in addition to a polygonal shape such as a triangular shape and a rectangular shape.

The core material 1 includes the above three-dimensional structure such that the three-dimensional structure continues in the production direction Y. That is, as shown in FIG. 4, a plurality of mountain portions 11a, 11b, 11c, 11d is continuously formed in the production direction Y. Similarly, valley portions 12 are formed continuously. The connection among the mountain portions 11 and the connection among the valley portions 12 are performed by alternately repeating two kinds of connection methods.

In a first connection method, as shown in FIG. 4, top surfaces 17b, 17c of the two adjacent mountain portions 11b, 11c are connected through mountain portion connection surfaces 15b, 15c each of which has a trapezoidal shape, on a first folding line X1 in the width direction. The mountain portion connection surface 15 is formed at a right angle to the top surface 17. On the first folding line X1 in the width direction, bottom surfaces 14b, 14c of two adjacent valley portions are directly connected. In a second connection method, as shown in FIG. 4, bottom surfaces 14a, 14b (or 14c, 14d) of two adjacent valley portions are connected through valley portion connection surfaces 16a, 16b (or 16c, 16d) each of which has a trapezoidal shape, on a second folding line X2 in the width direction. The valley portion connection surface 16 is formed at a right angle to the bottom surface 14. On the second folding line X2 in the width direction, top surfaces 12a, 12b (or 12c, 12d) of two adjacent mountain portions are directly connected.

In this way, in the core material 1, a plurality of three-dimensional structures (the mountain portion 11, the valley portion 12) is connected through connection regions (the mountain portion connection surface 15, the valley portion connection surface 16), and by folding the connection region, the core layer of the laminated hollow formed body in the present invention is formed. Specifically, on the first folding line X1, mountain folding is performed such that the bottom surfaces 14b, 14c of the two adjacent valley portions overlap with each other through the back surfaces and the mountain portion connection surfaces 15b, 15c of the two adjacent mountain portions are folded to open at an angle of 180 degrees. Furthermore, on the second folding line X2, valley folding is performed such that the top surfaces 17a, 17b (or 17c, 17d) of the two adjacent mountain portions overlap with each other and the valley portion connection surfaces 16a, 16b (or 16c, 16d) of the two adjacent valley portions are folded to close at an angle of 180 degrees. FIG. 5 shows the core layer 10 of the laminated hollow formed body in the present invention that is obtained by folding the core material 1 in this way.

As shown in FIG. 5, the core layer 10 includes the hollow cells 20 that have a roughly hexagonal tubular shape and that are disposed along a plurality of rows, and hollow cells 20A, 20C, 20E each of which is formed from two adjacent mountain portions and hollow cells 20B, 20D each of which is formed from two adjacent valley portions are disposed along every other row. Broken lines 18 in FIG. 5 show surfaces corresponding to the back surface of the core material, and roughly show inner walls of the hollow cells 20 having a roughly hexagonal tubular shape.

Each of the hollow cells 20A, 20C, 20E formed from the mountain portions includes six cell side walls (also referred to as cell standing walls) that form a roughly hexagonal tubular shape, and the cell side walls are formed from two top surfaces 17 and four side surfaces 13 of the cell material. At cell end portions on one surface (a surface on the front side of the paper plane in FIG. 5) of the core layer 10, the hollow cells 20A, 20C, 20E include closed surfaces 21A, 21C, 21E that have a roughly hexagonal tubular shape and that close the cell end portions respectively, and each of the closed surfaces 21 on one side is formed by two trapezoidal mountain portion connection surfaces 15 of the cell material. Furthermore, at cell end portions on the other surface (a surface on the back side of the paper plane in FIG. 5) on the opposite side of the core layer 10, the hollow cells 20A, 20C, 20E include open ends 22A, 22C, 22E that are open in a roughly hexagonal shape. The respective internal spaces of the hollow cells 20A, 20C, 20E communicate with the exterior through the open ends 22A, 22C, 22E.

Each of the hollow cells 20B, 20D formed from the valley portions includes six cell side walls that form a roughly hexagonal tubular shape, and the cell side walls are formed from two bottom surfaces 14 and four side surfaces 13 of the cell material. At cell end portions on the one surface of the core layer 10, the hollow cells 20B, 20D include open ends 22B, 22D that are open in a roughly hexagonal shape. The respective internal spaces of the hollow cells 20B, 20D communicate with the exterior through the open end 22B, 22D. Furthermore, at cell end portions on the other surface on the opposite side of the core layer 10, the hollow cells 20B, 20D include closed surfaces 21B, 21D that have a roughly hexagonal tubular shape and that close the cell end portions respectively, and each of the closed surfaces 21 on the other side is formed by two trapezoidal valley portion connection surfaces 16 of the cell material.

In this way, the core layer 10 includes the one-side closed surfaces 21A, 21C, 21E formed from the mountain portions of the cell material, at the cell end portions on the one surface, along every other row, and includes the other-side closed surfaces 21B, 21D formed from the valley portions of the cell material, at the cell end portions on the other surface, along different hollow cell rows from the above rows. Unless described otherwise, both closed surfaces 21 of the one-side closed surface and the other-side closed surface have a substantially identical function.

As shown in FIG. 5, the hollow cell 20 on each row of the hollow cells 20A to 20E includes the double standing wall 24 constituted by the two cell standing walls 23a, 23b between adjacent hollow cells 20, in the row. The thickness of the cell standing wall 23 is the thickness of the sheet of the core material 1, and consequently, the thickness of the double standing wall 24 is twice the thickness of the sheet of the core material 1. The thickness of the sheet of the core material 1 is also the thickness of the closed surface 21 of the hollow cell 20. The thickness of the sheet of the core material 1, that is, the thickness of the single cell standing wall 23 of the hollow cell 20 and the thickness of the closed surface 21 are not limited to this. For example, a range from 0.05 mm to 0.50 mm is preferable, and a range from 0.15 mm to 0.30 mm is more preferable.

The weight density (the weight per unit area) of the core layer 10 should preferably be in a range from 400 g/m² to 4000 g/m², and should more preferably be in a range from 500 g/m² to 3000 g/m², but it is not limited thereto because of variation depending on a component of the automobile for which the laminated hollow formed body is used. The strength of the core layer 10 is generally higher as the height of the core layer 10 is higher and the weight density is higher.

The weight density of the core layer 10 can be adjusted by pitches Pcx, Pcy (the distances among central axes of hollow cells) among hollow cells 20 of the core layer 10, as shown in FIG. 5, in addition to the kind of the material of the core layer 10, the height of the core layer 10, and the thickness (the thickness of the material sheet) of the cell standing walls of the cells 20. For adjusting the weight density of the core layer 10 in the above range, for example, the pitch Pcy between a hollow cell 20 in the production direction Y of the core and an adjacent hollow cell 20 in the direction of the row should preferably be in a range from 2 mm to 20 mm, and should more preferably be in a range from 3 mm to 15 mm.

An example of the production method for the core layer 10 of the laminated hollow formed body 100 according to the present invention has been described above, but the present invention is not limited to this. The core layer may be obtained by a different production method, and the hollow cell does not need to have an approximately hexagonal shape, for example, as long as the core layer includes the double standing wall formed by two adjacent hollow cells. Furthermore, the hollow cell does not need to include the closed surface, and both ends of the hollow cell may form closed surfaces.

### EXAMPLES

Examples and Comparative Examples of the present invention will be described below.

### Examples 1-9, Comparative Examples 1-5

A film (material: polypropylene (PP) film, thickness: 65 µm) and a front material layer (material: plain needle non-woven fabric, weight density: 250 g/m², thickness: 1.5 mm) were attached to one surface of a core layer (material: polypropylene (PP) resin, thickness of single cell standing wall: 0.2 mm, pitch Pcy between hollow cells: 8 mm, height of core layer: 10 mm) including double standing walls, and a film (material: polypropylene (PP) film, thickness: 65 µm) and a back material layer (material: spunbonded non-woven fabric, weight density: 50 g/m², thickness: 0.1 mm) were attached to the other surface of the core layer. Thereby, a laminated hollow formed body in which the front material layer, the film, the core layer, the film, and the back material layer are laminated in this order was obtained.

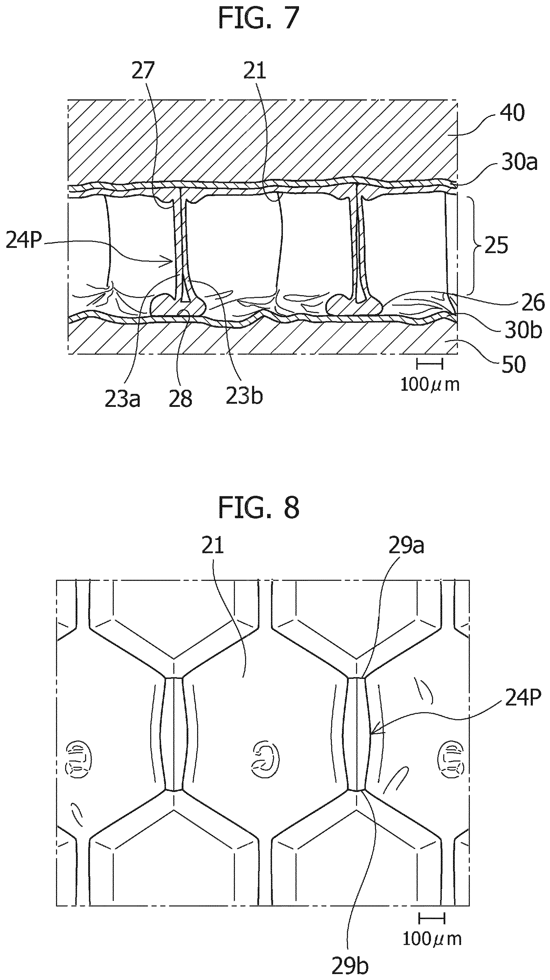

Next, the laminated hollow formed body was adopted as an original fabric, and the hot press forming was performed at a temperature of 200°C, using a hot press forming machine, so that a trunk side that was a sound insulation member for an automobile was made. FIG. 6 shows an external appearance of a trunk side 60. Then, the trunk side 60 was cut at various portions, and the change in the height of the core layer in the laminated hollow formed body was examined. The height of the core layer was decreased at curved portions and end portions of the trunk side 60, and the height of the core layer were maintained at planar portions. Furthermore, sections at regions where the core layer had heights of 2 mm, 4 mm, 6 mm, 8 mm, and 10 mm were observed. First, FIG. 7 to FIG. 9 show the observation result about the region where the height of the core layer was 6 mm (Example 1).

FIG. 7 shows a section of the laminated hollow formed body. FIG. 7 corresponds to a α-α arrow section in FIG. 5. As shown in FIG. 7, in the double standing wall 24P of the core layer 10, the two cell standing walls 23a, 23b extended from the first end portion 27 contacting with the front material layer 40 to the second end portion 28 contacting with the back material layer 50 in a linear shape or a curved shape (the extending portion 25). The two cell standing walls 23a, 23b in a linear shape or a curved shape extended parallel or in the same direction as each other, and the two cell standing walls 23a, 23b did not even partially fuse. Moreover, due to the integral melting of the two cell standing walls, the second end portion 28 contacting with the back material layer 50 became the lump portion 26 thicker than the thickness of the extending portion 25.

FIG. 8 is a plan view of the core layer on the front material layer side after the film of the laminated hollow formed body was removed. As shown in FIG. 8, the closed surface 21 of the roughly hexagonal tubular hollow cell 20P of the core layer 10 fused at both ends 29a, 29b of the double standing wall 24P, but the other portion did not fuse. A section of the double standing wall at the spot was observed. At the portion that did not fuse, the two cell standing walls extended in a linear shape or a curved shape.

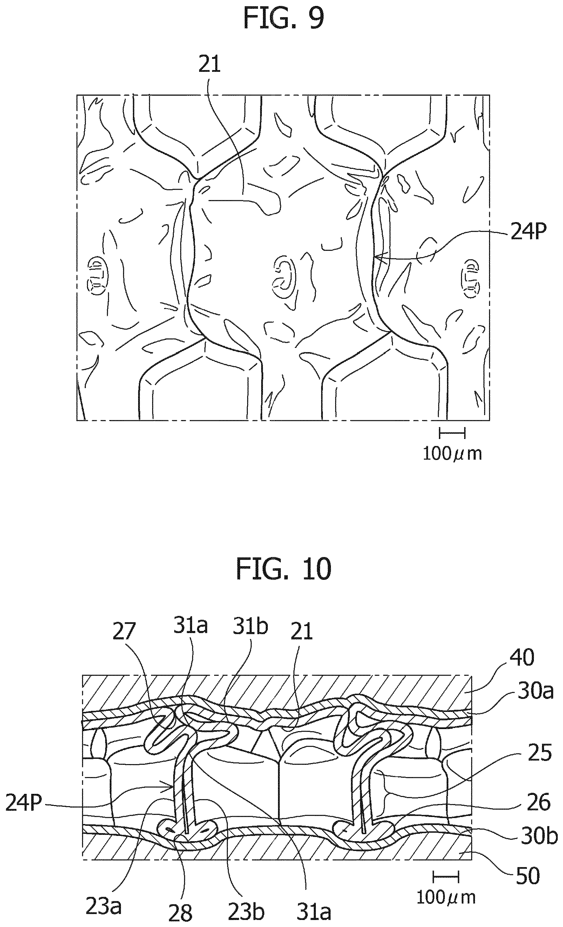

FIG. 9 is a plan view of the core layer on the back material layer side after the film of the laminated hollow formed body at the region where the hot press forming was performed was removed. As shown in FIG. 9, the closed surface 21 of the roughly hexagonal tubular hollow cell 20P of the core layer 10 strongly fused along the double standing wall 24P. A section of the double standing wall at the spot was observed. The portion that strongly fused became the lump portion made of the two cell standing walls integrally melted.

Force was applied to the region where the height of the core layer was 6 mm in Example 1, by pressing, bending, or the like. Strange noises such as crunching were not observed.

For comparison, a trunk side was made while the laminated hollow formed body was adopted as the original fabric, similarly to the examples except that the heating temperature in the hot press forming was 165°C, and were cut. Then, sections at regions where the core layer had heights of 2 mm, 4 mm, 6 mm, 8 mm, and 10 mm were observed. FIG. 10 shows the observation result about the region where the height of the core layer was 6 mm similarly to Example 1 (Comparative Example 1). FIG. 10 corresponds to the α-α arrow section in FIG. 5.

As shown in FIG. 10, in the double standing wall 24P of the core layer 10 in Comparative Example 1, the lump portion 26 made of the two cell standing walls integrally melted was formed at the second end portion 28 contacting with the back material layer 50, similarly to Example 1. However, the two cell standing walls 23a, 23b did not extend from the first end portion 27 contacting with the front material layer 40 to the second end portion 28 contacting the back material layer 50, in a linear shape or a curved shape, and were irregularly wavy. The two cell standing walls 23a, 23b were irregularly wavy and deformed in this way partially fused with each other at a plurality of sites 31a. Furthermore, there was a site 31b where one cell standing wall 23b greatly deformed in an irregular wavy manner and partially fused with the closed surface 21 of the core layer 10. In particular, in the case in which the two cell standing walls 23a, 23b deformed to different shapes, many fused sites were observed.

Force was applied to the region where the height of the core layer in Comparative Example 1 was 6 mm, by pressing, bending, or the like, similarly to Example 1. Strange noises such as crunching were observed.

Table 1 shows the observation result about the sections at the regions where the core layer had heights of 2 mm, 4 mm, and 8 mm and the observation result about strange sounds in the case in which the heating temperature in the hot press forming was 200°C and in the case in which the heating temperature in the hot press forming was 165°C. In addition, Table 1 show the observation results about the sections at the regions where the core layer had the heights and the observation results about strange sounds in the case in which the heating temperature in the hot press forming was 180°C.

**Table 1**

| | Temperature [°C] | Core height [mm] | Section of double standing wall | | | Strange noises |
|---|---|---|---|---|---|---|
| | | | Extending portion | Partial fusion | Lump portion | |
| Example 1 | 200 | 6 | Linear or curved | Not generated | Generated at one end portion | Not observed |
| Example 2 | 180 | 6 | Linear or curved | Not generated | Generated at one end portion | Not observed |
| Comparative Example 1 | 165 | 6 | Irregular waviness | Generated | Generated at one end portion | Observed |
| Example 3 | 200 | 4 | Linear or curved | Not generated | Generated at both end portions | Not observed |
| Example 4 | 180 | 4 | Linear or curved | Not generated | Generated at one end portion | Not observed |
| Comparative Example 2 | 165 | 4 | Irregular waviness | Generated | Generated at one end portion | Observed |
| Comparative Example 3 | 200 | 2 | Did not exist | Not generated | Generated at both end portions | Not observed |
| Comparative Example 4 | 180 | 2 | Did not exist | Not generated | Generated at both end portions | Not observed |
| Comparative Example 5 | 165 | 2 | Did not exist | Not generated | Generated at both end portions | Not observed |
| Example 7 | 200 | 8 | Linear or curved | Not generated | Generated at one end portion | Not observed |
| Example 8 | 180 | 8 | Linear or curved | Not generated | Generated at one end portion | Not observed |
| Example 9 | 165 | 8 | Same direction | Not generated | Generated at one end portion | Not observed |

As shown in Table 1, also at the region where the height of the core layer became 6 mm by the hot press forming at the temperature of 180°C (Example 2), one end portion became the lump portion, and the two cell standing walls extended from one end portion to the other end portion in a linear shape or a curved shape, similarly to Example 1 at the temperature of 200°C. Also in Example 2, strange noises such as crunching were not observed.

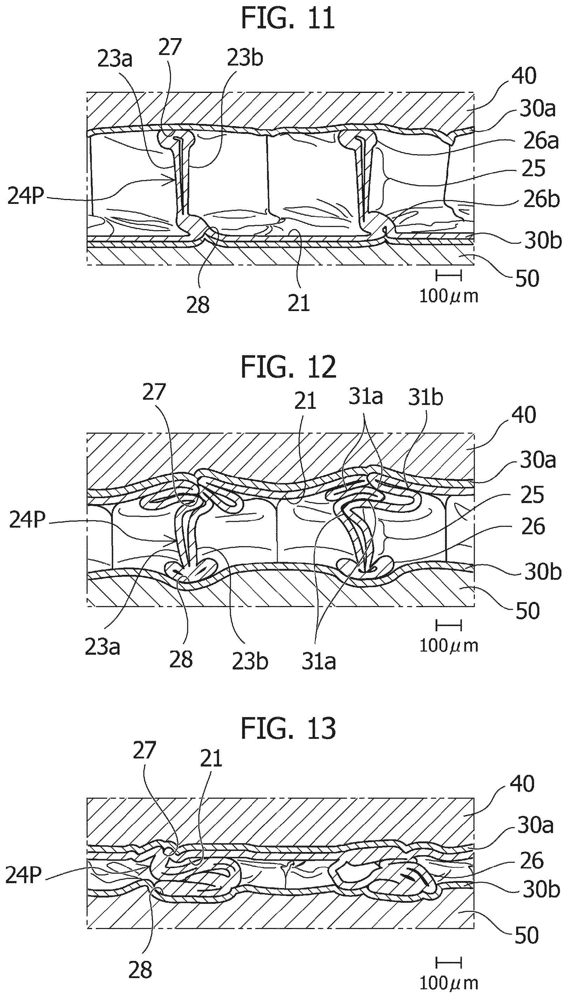

As for the region where the height of the core layer was 4 mm, first, in Example 4 in which the temperature in the hot press forming was 180°C, one end portion became the lump portion, and the two cell standing walls extended from one end portion to the other end portion in a linear shape or a curved shape, similarly to Example 1. In Example 3 in which the temperature in the hot press forming was 200°C, as shown in FIG. 11, in the double standing wall 24P, the first end portion 27 contacting with the front material layer 40 and the second end portion 28 contacting with the back material layer 50 respectively became lump portions 26a, 26b by the integral melting of the two cell standing walls. Moreover, the two cell standing walls extended from one lump portion 26a to the other lump portion 26b in a linear shape. In addition, in a Comparative Example 2 in which the temperature in the hot press forming was 165°C, as shown in FIG. 12, the second end portion 28 contacting with the back material layer 50 became the lump portion 26, but the two cell standing walls 23a, 23b did not extend from the second end portion 28 to the first end portion 27 contacting with the front material layer 40 in a linear shape or a curved shape, existed so as to be irregularly wavy, and deformed to different shapes. In Comparative Example 2, the fusion occurred at more sites 31a, 31b than in Comparative Example 1. FIG. 11 corresponds to a β-β arrow section in FIG. 5, and FIG. 12 corresponds to the α-α arrow section in FIG. 5. As for strange noises, in Examples 3 and 4, strange noises such as crunching were not observed, whereas in Comparative Example 2, strange noises such as crunching were observed.

As for the region where the height of the core layer was 2 mm, in Comparative Example 3 in which the temperature in the hot press forming was 200°C, as shown in FIG. 13, in the double standing wall 24P, the first end portion 27 contacting with the front material layer 40 and the second end portion 28 contacting with the back material layer 50 could be said to respective lump portions, or could be said to be one lump portion due to a further fusion. That is, the two cell standing walls extending from one end portion to the other end portion in a linear shape or a curved shape did not exist. FIG. 13 corresponds to the α-α arrow section in FIG. 5. In Comparative Example 4 in which the temperature in the hot press forming was 180°C and in Comparative Example 5 in which the temperature in the hot press forming was 165°C had the same structure. As for strange noises, in each of Comparative Examples 3 to 5, strange noises such as crunching were not observed.

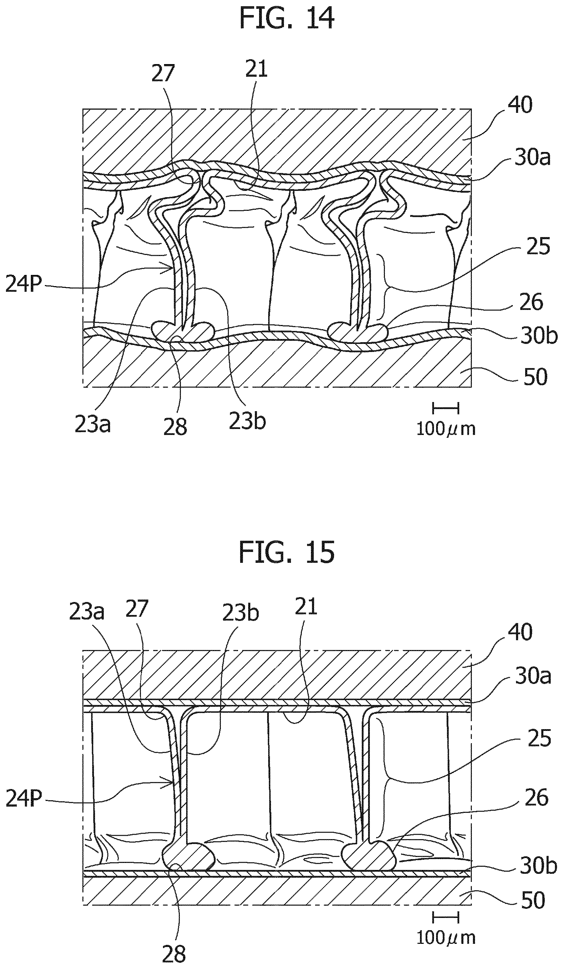

As for the region where the height of the core layer was 8 mm, in Example 9 in which the temperature in the hot press forming was 165°C, as shown in FIG. 14, in the double standing wall 24P, the second end portion 28 contacting with the back material layer 50 became the lump portion 26, and the two cell standing walls 23a, 23b could not be said to extend from the lump portion 26 to the first end portion 27 contacting with the front material layer 40 in a linear shape or a curved shape, but extended in the same direction as each other. Unlike Comparative Example 1, the two cell standing walls 23a, 23b did not fuse at any site. As for strange noises, in Example 9, strange noises such as crunching were not observed. In Example 7 in which the temperature in the hot press forming was 200°C, as shown in FIG. 15, the second end portion 28 contacting the back material layer 50 became the lump portion 26, and the two cell standing walls 23a, 23b extended from the lump portion 26 to the first end portion 27 contacting with the front material layer 40 in a linear shape or a curved shape, similarly to Example 1. Example 8 in which the temperature in the hot press forming was 180°C also had the same structure. In Examples 7 and 8, strange noises such as crunching were not observed. Each of FIG. 14 and FIG. 15 corresponds to the α-α arrow section in FIG. 5.

From the results in the Examples and the Comparative Examples, it is estimated that strange noises such as crunching are generated when the two cell standing walls of the core layer do not extend in the same direction as each other by being irregularly wavy or the like and deform to different shapes from each other, a partial site where the two cell standing wall fuse together is generated and this fusing site comes off. Furthermore, it is estimated that strange noises such as crunching are generated when a partial site where one cell standing wall is greatly irregularly wavy and fuses with the closed surface of the core layer is generated and this fusing site comes off. However, it is estimated that strange noises such as crunching are not generated when the lump portion is generated by the integral melting of the two cell standing walls because the two cell standing walls are not separated anymore.

The reason why the two cell standing walls of the double standing wall extended from the first end portion contacting with the front material layer to the second end portion contacting with the back material layer in a linear shape or a curved shape by the hot press forming without being irregularly wavy in Examples 1 to 4, unlike Comparative Examples 1 and 2, is estimated to be because the lengths of the two cell standing walls shrank to lengths comparable to the height of the core layer after the hot press forming, by the heat shrinkage due to the high heating temperatures, and therefore, the partial fusion of the two cell standing walls could be prevented. The thickness of the cell standing wall of the double standing wall of the laminated hollow formed body in each of Examples 1 to 4 was actually measured. It was observed that the thickness of the cell standing wall of the extending portion of the double standing wall of the core layer to which the hot press forming was performed was greater than the thickness of the cell standing wall of the double standing wall of the core layer to which the hot press forming was not performed at many portions.

Furthermore, the reason the end portion contacting the back material layer of the double standing wall became the lump portion and the end portion contacting the front material layer did not become the lump portion in Examples 1, 2, and 4 is estimated to be because the front material layer had a higher basis weight and a greater thickness than the back material layer, and therefore, even when the front and back of the laminated hollow formed body were heated at the same temperature by the hot press forming machine, the end portion of the double standing wall that contacted the front material layer was lower than the end portion contacting with the back material layer in transferred temperature and was not heated to a temperature at which the lump portion was generated. It is estimated that the hot press forming was performed such that the height of the core layer was 4 mm in Example 3, and therefore, the heating was performed for a longer time than in Example 1 for 6 mm although the heating temperature was the same as that in Example 1, so that the end portion contacting with the front material layer also became the lump portion by the integral melting of the cell standing walls.

### Example 10, Comparative Examples 6, 7

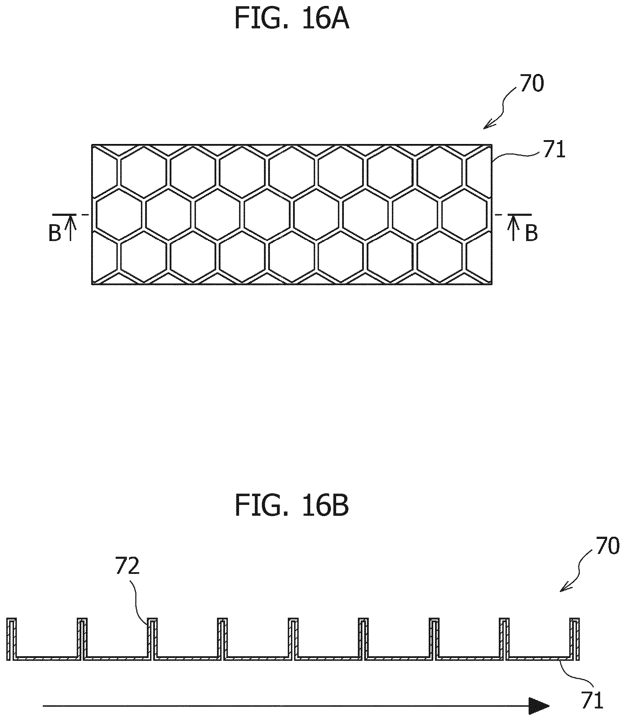

A test to measure the tensile strength of the core layer of the laminated hollow formed body to which the hot press forming was performed was performed. This test was performed in conformity to JIS K 7127-1999 "Plastic -Test method for Tensile Property - Part 3: Test Condition for Film and Sheet". A laminated hollow formed body as a measuring object was obtained under the same conditions as those in Example 1. Thereafter, in Example 10, while this laminated hollow formed body was adopted as the original fabric, the hot press forming was performed at a temperature of 180°C, using the hot press forming machine, and a test specimen for measurement that had a rectangular shape with a length of 150 mm and a width of 50 mm was cut out of the laminated hollow formed body to which the hot press forming was performed. From the test specimen, the front material layer, the back material layer, and the two films were further removed, and only the core layer was obtained. As shown in FIG. 16A and FIG. 16B, the cutting was performed such that the length direction of a test specimen 70 (that is, the tensile direction in the test) was a direction in which double standing walls 72 of a core layer 71 overlapped in the same direction (that is, the production direction Y of the core layer shown in FIG. 4 and FIG. 5). The thickness of the test specimen 70 (that is, the height of the core layer) was measured, and was 7.6 mm as the result. FIG. 16A and FIG. 16B are schematic diagrams, and do not express the actual size and thickness of the cell with respect to the test specimen.

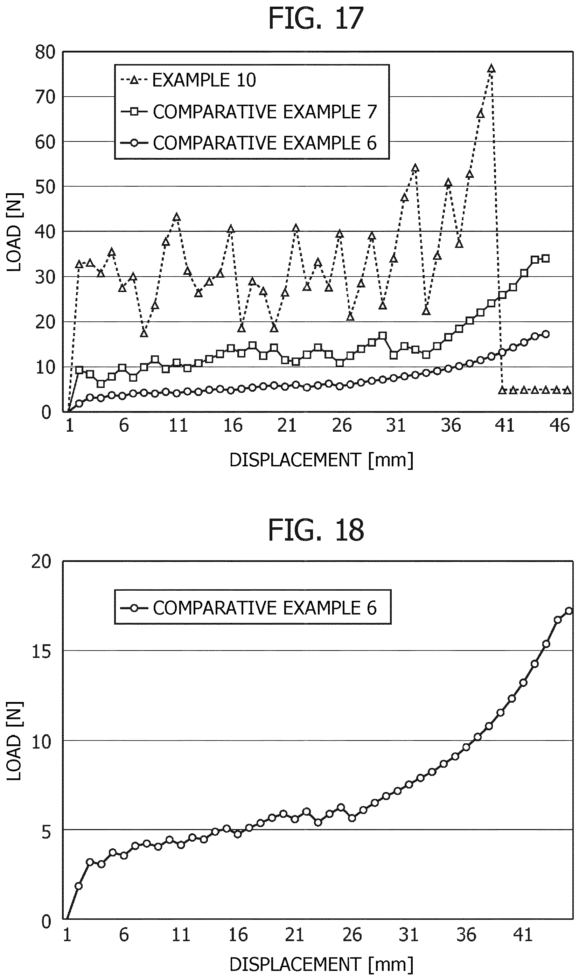

Then, this test specimen was stretched in the length direction by a universal testing machine (model 5965) manufactured by Instron, as shown by an arrow in FIG. 16B. The test temperature was room temperature, and the test speed was 200 mm/minute. The displacement (mm) of the test specimen and the load (N) on that occasion were measured over time. The result is shown in FIG. 17.

For comparison, a test specimen was made similarly to Example 10 except that the temperature in the hot press forming was 170°C (Comparative Example 6) or 175°C (Comparative Example 7), and the tensile strength test was performed. The result is shown in FIG. 17. The thickness of the test specimen (that is, the height of the core layer) was measured, and was 7.6 mm as the result, in each of Comparative Example 6 and Comparative Example 7.

As shown in a graph of FIG. 17, as for the core layer in Example 10, when the displacement was 3 mm, the load rose to 33 N, and thereafter fell. Next, when the displacement was 5 mm, the load rose to 36 N, and thereafter fell. Furthermore, when the displacement was 7 mm, the load rose to 30 N, and thereafter fell. In this way, a result indicating that there was a plurality of peaks of the load with respect to the increase in displacement was obtained. The generation of the plurality of peaks of the load suggests that the value of each load peak indicates a load when one double standing wall was separated into two original cell standing walls because the tensile direction of the test specimen was the direction of the overlap of the double standing walls. The reason the value of the peak of the load was higher as the displacement increased is thought to be because the separation occurred from double standing walls with relatively weaker lump portions. The last peak of the load is thought to show not the time of the separation of the double standing wall, but the time of the fracture of the core layer. In the graph of FIG. 17, as the tensile strength of the core layer in Example 10, the value at the first peak of the load is 33 N at a displacement of 3 mm, and the value at the peak with the lowest load among all load peaks except the peak at the time of the fracture of the core layer was 29 N at a displacement of 18 mm. In any case, the tensile strength of the core layer in Example 10 was 20 N or greater.

On the other hand, as tensile strength of the core layer in Comparative Example 6 in which the temperature in the hot press forming was 170°C and in Comparative Example 7 in which the temperature in the hot press forming was 175°C, as shown in the graph of FIG. 17, each of the value at the first peak of the load and the value at the peak with the lowest load among all load peaks except the peak at the time of the fracture of the core layer was lower than 20 N. In the graph of FIG. 17, no peak of the load appears in Comparative Example 6. However, as shown in a graph of FIG. 18 in which the scale of the load is different, a plurality of peaks of the load was observed also in the core layer in Comparative Example 6.

Force was applied to the laminated hollow formed body to which the hot press forming was performed in Example 10, by pressing, bending, or the like. Strange noises such as crunching were not observed. On the other hand, when force was applied to the laminated hollow formed bodies to which the hot press forming was performed in Comparative Example 6 and Comparative Example 7 by pressing, bending, or the like, strange noises such as crunching were observed. The interior of each core layer of the laminated hollow formed bodies to which the hot press forming was performed in Example 10, Comparative Example 6, and Comparative Example 7 was observed. It was confirmed that the lump portion was formed at the end portion of the double standing wall of the core layer in Example 10, but the lump portion could not be confirmed in the double standing wall of each core layer in Comparative Example 6 and Comparative Example 7.

### REFERENCE SYMBOL LIST

1: Core material
10: Core layer
11: Mountain portion
12: Valley portion
13: Side surface
14: Bottom surface
15: Mountain portion connection surface
16: Valley portion connection surface
17: Top surface
18: Core material back surface
20: Hollow cell
21: Closed surface
22: Open end
23: Cell standing wall
24: Double standing wall
25: Extending portion
26: Lump portion
30: Film
40: Front material layer
50: Back material layer
70: Test specimen
71: Core layer
72: Double standing wall
100: Laminated hollow formed body

## Claims

1. A laminated hollow formed body comprising:
a core layer that is made of resin and in which hollow cells having a tubular shape are disposed along a plurality of rows;
a front material layer that is provided on one surface of the core layer; and
a back material layer that is provided on the other surface of the core layer, wherein:
the core layer includes a double standing wall with the two adjacent hollow cells, and the double standing wall is constituted by two cell standing walls;
the core layer includes a first region having a first height, and a second region having a second height lower than the first height; and
the two cell standing walls of the double standing wall of the core layer at the second region extend in the same direction as each other from a first end portion contacting with the front material layer to a second end portion contacting with the back material layer, and at least one of the first end portion and the second end portion is a lump portion made of the two cell standing walls integrally melted.

2. The laminated hollow formed body according to claim 1, wherein the two cell standing walls of the double standing wall extend from the first end portion contacting the front material layer to the second end portion contacting the back material layer, in a linear shape or a curved shape.

3. The laminated hollow formed body according to claim 1 or 2, wherein thickness of the back material layer is less than thickness of the front material layer, and the second end portion contacting with the back material layer is the lump portion made of the two cell standing walls integrally melted.

4. The laminated hollow formed body according to any one of claims 1 to 3, wherein both of the first end portion and the second end portion are the lump portion made of the two cell standing walls integrally melted.

5. The laminated hollow formed body according to any one of claims 1 to 4, wherein each thickness of the two cell standing walls that constitute the double standing wall of the core layer at the second region and that extend from the first end portion to the second end portion in a linear shape or a curved shape is greater than thickness of each cell standing wall of the double standing wall of the core layer at the first region.

6. The laminated hollow formed body according to any one of claims 1 to 5, wherein each of the hollow cells of the core layer includes a closed surface at one end and includes an open end at the other end, internal spaces of the hollow cells communicate with the front material layer or the back material layer through the open ends of the hollow cells, the closed surfaces and the open ends of the hollow cells are disposed along every other row on both surfaces of the core layer, and the closed surfaces of the adjacent hollow cells fuse with each other.

7. The laminated hollow formed body according to any one of claims 1 to 6, wherein a relationship between the first height h₁ of the core layer at the first region and the second height h₂ of the core layer at the second region satisfies the expression 0.2 < h₂/h₁ < 0.8.

## Patentansprüche

1. Ein laminierter Hohlformkörper, bestehend aus:
einer Kernschicht, die aus Harz besteht und in der hohle Zellen mit einer röhrenförmigen Form entlang einer Vielzahl von Reihen angeordnet sind;
eine vordere Materialschicht, die auf einer Oberfläche der Kernschicht vorgesehen ist;
und
eine hintere Materialschicht, die auf der anderen Oberfläche der Kernschicht vorgesehen ist, wobei:
die Kernschicht eine doppelte Stehwand mit den beiden benachbarten Hohlzellen umfasst und die doppelte Stehwand aus zwei Zellstehwänden besteht;
die Kernschicht einen ersten Bereich mit einer ersten Höhe und einen zweiten Bereich mit einer zweiten Höhe umfasst, die niedriger ist als die erste Höhe; und
sich die beiden Zellstehwände der doppelten Stehwand der Kernschicht im zweiten Bereich in derselben Richtung voneinander erstrecken, von einem ersten Endabschnitt, der mit der vorderen Materialschicht in Kontakt steht, zu einem zweiten Endabschnitt, der mit der hinteren Materialschicht in Kontakt steht, und mindestens einer der ersten und zweiten Endabschnitte ein klumpenförmiger Abschnitt ist, der aus den beiden Zellstehwänden besteht, die integral verschmolzen sind.

2. Der laminierte Hohlformkörper gemäß Anspruch 1, wobei sich die beiden Zellstehwände der doppelten Stehwand vom ersten Endabschnitt, der mit der vorderen Materialschicht in Kontakt steht, bis zum zweiten Endabschnitt, der mit der hinteren Materialschicht in Kontakt steht, in einer linearen oder gekrümmten Form erstrecken.

3. Der laminierte Hohlformkörper gemäß Anspruch 1 oder 2, wobei die Dicke der hinteren Materialschicht geringer ist als die Dicke der vorderen Materialschicht und der zweite Endabschnitt, der mit der hinteren Materialschicht in Kontakt steht, der klumpenförmige Abschnitt ist, der aus den beiden Zellwänden besteht, die integral verschmolzen sind.

4. Der laminierte Hohlformkörper gemäß einem der Ansprüche 1 bis 3, wobei sowohl der erste Endabschnitt als auch der zweite Endabschnitt der klumpenförmige Abschnitt sind, der aus den beiden Zellstehwänden besteht, die integral verschmolzen sind.

5. Der laminierte Hohlformkörper gemäß einem der Ansprüche 1 bis 4, wobei jede Dicke der beiden Zellstehwände, die die doppelte Stehwand der Kernschicht im zweiten Bereich bilden und sich vom ersten Endabschnitt zum zweiten Endabschnitt in einer linearen Form oder einer gekrümmten Form erstrecken, größer ist als die Dicke jeder Zellstehwand der doppelten Stehwand der Kernschicht im ersten Bereich.

6. Der laminierte Hohlformkörper gemäß einem der Ansprüche 1 bis 5, wobei jede der Hohlzellen der Kernschicht an einem Ende eine geschlossene Oberfläche und am anderen Ende ein offenes Ende aufweist, die Innenräume der Hohlzellen über die offenen Enden der Hohlzellen mit der vorderen Materialschicht oder der hinteren Materialschicht in Verbindung stehen, die geschlossenen Oberflächen und die offenen Enden der Hohlzellen entlang jeder zweiten Reihe auf beiden Oberflächen der Kernschicht angeordnet sind und die geschlossenen Oberflächen der benachbarten Hohlzellen miteinander verschmolzen sind.

7. Der laminierte Hohlformkörper gemäß einem der Ansprüche 1 bis 6, wobei eine Beziehung zwischen der ersten Höhe h₁ der Kernschicht im ersten Bereich und der zweiten Höhe h₂ der Kernschicht im zweiten Bereich die Gleichung 0.2 < h₂/h₁ < 0.8 erfüllt.

## Revendications

1. Corps laminé creux comprenant :
une couche centrale qui est constituée de résine et dans laquelle des cellules creuses ayant une forme tubulaire sont disposées le long d'une pluralité de rangées;
une couche de matériau avant qui est prévue sur une surface de la couche centrale; et
une couche de matériau arrière qui est prévue sur l'autre surface de la couche centrale, dans lequel :
la couche centrale comprend une double paroi verticale avec les deux cellules creuses adjacentes, et la double paroi verticale est constituée de deux parois verticales de cellule;
la couche centrale comprend une première région ayant une première hauteur, et une deuxième région ayant une deuxième hauteur inférieure à la première hauteur; et
les deux parois verticales de cellule de la double paroi verticale de la couche centrale au niveau de la seconde région s'étendent dans la même direction l'une par rapport à l'autre à partir d'une première partie d'extrémité en contact avec la couche de matériau avant jusqu'à une seconde partie d'extrémité en contact avec la couche de matériau arrière, et au moins l'une de la première partie d'extrémité et de la seconde partie d'extrémité est une partie de bloc constituée des deux parois verticales de cellule fondues d'un seul tenant.

2. Corps laminé creux selon la revendication 1, dans lequel les deux parois verticales de cellule de la double paroi verticale s'étendent à partir de la première partie d'extrémité en contact avec la couche de matériau avant jusqu'à la seconde partie d'extrémité en contact avec la couche de matériau arrière, sous une forme linéaire ou une forme incurvée.

3. Corps laminé creux selon la revendication 1 ou 2, dans lequel l'épaisseur de la couche de matériau arrière est inférieure à l'épaisseur de la couche de matériau avant, et la seconde partie d'extrémité en contact avec la couche de matériau arrière est la partie de bloc constituée des deux parois verticales de cellule fondues d'un seul tenant.

4. Corps laminé creux selon l'une quelconque des revendications 1 à 3, dans lequel à la fois la première partie d'extrémité et la seconde partie d'extrémité sont la partie de bloc constituée des deux parois verticales de cellule fondues d'un seul tenant.

5. Corps laminé creux selon l'une quelconque des revendications 1 à 4, dans lequel chaque épaisseur des deux parois verticales de cellule qui constituent la double paroi verticale de la couche centrale au niveau de la seconde région et qui s'étendent de la première partie d'extrémité à la seconde partie d'extrémité sous une forme linéaire ou une forme incurvée est supérieure à l'épaisseur de chaque paroi verticale de cellule de la double paroi verticale de la couche centrale au niveau de la première région.

6. Corps laminé creux selon l'une quelconque des revendications 1 à 5, dans lequel chacune des cellules creuses de la couche centrale comprend une surface fermée à une extrémité et comprend une extrémité ouverte à l'autre extrémité, des espaces internes des cellules creuses communiquent avec la couche de matériau avant ou la couche de matériau arrière à travers les extrémités ouvertes des cellules creuses, les surfaces fermées et les extrémités ouvertes des cellules creuses sont disposées le long de chaque autre rangée sur les deux surfaces de la couche centrale, et les surfaces fermées des cellules creuses adjacentes fusionnent les unes avec les autres.

7. Corps laminé creux selon l'une quelconque des revendications 1 à 6, dans lequel une relation entre la première hauteur h₁ de la couche centrale au niveau de la première région et la seconde hauteur h₂ de la couche centrale au niveau de la seconde région satisfait l'expression 0.2 < h₂/h₁ < 0.8.
